Europäisches Patentamt

European Patent Office

Office européen des brevets

(19)

(11) Numéro de publication : **0 283 339 B1**

(12)

# FASCICULE DE BREVET EUROPEEN

(45) Date de publication du fascicule du brevet :
**15.05.91 Bulletin 91/20**

(51) Int. Cl.⁵ : **G01D 15/28**

(21) Numéro de dépôt : **88400335.1**

(22) Date de dépôt : **16.02.88**

(54) **Machine graphique avec dispositif de réception d'un support d'impression continu.**

(30) Priorité : **16.02.87 FR 8701957**

(43) Date de publication de la demande :
**21.09.88 Bulletin 88/38**

(45) Mention de la délivrance du brevet :
**15.05.91 Bulletin 91/20**

(84) Etats contractants désignés :
**AT BE CH DE ES GB IT LI NL SE**

(56) Documents cités :
**EP-A- 0 191 222**
**DE-A- 2 317 030**
**US-A- 4 477 822**

(56) Documents cités :
**IBM TECHNICAL DISCLOSURE BULLETIN,
vol. 23, no. 5, octobre 1980, pages 2159-2160,
New York, US; B.P. FITZGIBBONS et al.:
"Paper take-up and alignment feature"**

(73) Titulaire : **Océ Graphics France S.A.
1, Rue Jean Lemoine B.P. 113
F-94003 Créteil Cedex (FR)**

(72) Inventeur : **Charroppin, Pascal
62, avenue de la Princesse
F-78110 Le Vésinet (FR)**

(74) Mandataire : **Hanneman, Henri W.A.M. et al
Océ-Nederland B.V. Patents and Information
Postbus 101
NL-5900 MA Venlo (NL)**

EP 0 283 339 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Description

La présente invention concerne une machine graphique, et plus particulièrement une machine du type comprenant un dispositif d'impression, un rouleau débiteur d'un support d'impression continu, des moyens d'entraînement du support d'impression pour le déplacer par rapport au dispositif d'impression, et un dispositif de réception du support d'impression disposé en aval du dispositif d'impression et comportant au moins un organe récepteur mobile destiné à venir en prise avec le support d'impression pour permettre le stockage de celui-ci.

Un domaine d'application plus particulièrement visé par l'invention est celui des machines à dessiner alimentées en continu. Dans ces machines, le dessin est réalisé par déplacement relatif entre le papier et une tête d'écriture. Généralement, le papier est déplacé longitudinalement (direction X), dans un sens et dans l'autre, au moyen par exemple d'un tambour d'entraînement rotatif contre lequel le papier est appliqué au moyen de galets presseurs ou au moyen d'un tambour d'entraînement muni de picots coopérant avec des perforations formées le long des bords du papier. La tête d'écriture est quant à elle déplacée, dans un sens et dans l'autre, dans une direction transversale (direction Y) perpendiculaire à la direction X.

Pour réaliser chaque dessin, une longueur suffisante de papier est dévidée du rouleau débiteur en entraînant celui-ci au moyen d'un moteur spécifique ou par traction exercée sur le papier par les moyens d'entraînement de celui-ci. Lorsqu'un dessin a été réalisé, une nouvelle longueur de papier est dévidée du rouleau débiteur tandis que la partie qui vient d'être imprimée est dirigée vers un dispositif de réception. Une machine à dessiner ayant les caractéristiques du préambule de la revendication 1 est divulguée par DE-A-2 317 030.

Avec cette machine à dessiner fonctionnant de façon automatique, il est courant de réaliser successivement plusieurs dessins, voire plusieurs dizaines de dessins sans surveillance par du personnel. Le dispositif de réception doit alors être conçu pour stocker la partie du papier portant les dessins sans provoquer de pliures ou autres défauts. Il a été proposé à cet effet d'utiliser un rouleau récepteur motorisé, ce qui nécessite un moteur particulier et des moyens pour commander celui-ci de façon appropriée.

Aussi, l'invention a-t-elle pour but de fournir une machine à dessiner, ou plus généralement une machine graphique, utilisant un support d'impression continu et munie de moyens qui permettent de stocker la partie imprimée du support d'impression de façon simple et peu coûteuse, et qui sont faciles à intégrer à des machines existantes.

Ces buts sont atteints au moyen d'une machine graphique du type indiqué en tête de la présente description et dans laquelle, conformément à l'invention, des moyens de transmission mécanique sont prévus entre le rouleau débiteur et l'organe récepteur mobile de manière à entraîner ce dernier par l'intermédiaire du rouleau débiteur.

Ainsi, aucun moyen d'entraînement particulier de l'organe récepteur n'est nécessaire. L'organe récepteur est entraîné par le rouleau débiteur, lui-même avantageusement entraîné par les moyens d'entraînement du support d'impression, via celui-ci, lorsque ce dernier est dévidé du rouleau débiteur.

L'organe récepteur mobile peut prendre différentes formes. Il est possible d'utiliser un tapis ou une bande sans fin au moyen duquel le support d'impression est entraîné par frottement pour être enroulé sur lui-même dans des conditions propres à éviter son endommagement

De préférence, l'organe récepteur mobile est constitué par un rouleau récepteur sur lequel le support d'impression est enroulé. Le rapport de transmission entre rouleau débiteur et rouleau récepteur est alors choisi de manière à assurer l'enroulement sur le rouleau récepteur d'au moins la longueur de papier dévidée du rouleau débiteur.

Les moyens de transmission entre le rouleau débiteur et l'organe récepteur comprennent avantageusement des moyens permettant un glissement relatif entre le rouleau débiteur et l'organe récepteur afin d'éviter un blocage du mouvement du support d'impression. Ces moyens consistent par exemple en un limiteur de couple.

Dans le cas évoqué d'une machine à dessiner alimentée en continu, chaque dessin est exécuté après avoir formé une boucle libre de papier de longueur suffisante à l'exécution du dessin. Pour former initialement la boucle libre, la longueur de papier nécessaire est dévidée du rouleau débiteur en commandant une avance de papier, puis un retour au début du format est réalisé en commandant un recul du papier sensiblement sur une même longueur. Le recul du papier provoquant alors un mouvement de l'organe récepteur, il est nécessaire, pour réaliser la boucle libre, d'éviter un rembobinage du papier sur le rouleau débiteur par entraînement de celui-ci par l'intermédiaire de l'organe récepteur et des moyens de transmission. Ce résultat est obtenu en n'autorisant le mouvement de rotation du rouleau débiteur que dans le sens du dévidage, par exemple au moyen d'une roue libre. Lors du recul du papier, le mouvement transmis à l'organe récepteur est alors intégralement absorbé par le limiteur de couple.

L'invention sera mieux comprise à la lecture de la description faite ci-après, à titre indicatif mais non limitatif, en référence aux dessins annexés sur lesquels:

- la figure 1 est une vue générale très schématique d'une machine graphique conforme à l'invention,
- la figure 2 est une vue en coupe montrant plus particulièrement les rouleaux débiteur et récepteur et les moyens de transmission mécaniques interposés entre ceux-ci dans la machine de la figure 1,

– les figures 3 à 6 sont des vues schématiques de profil illustrant le fonctionnement de la machine de la figure 1, et

– la figure 7 illustre très schématiquement une variante de réalisation du dispositif de réception dans une machine conforme à l'invention.

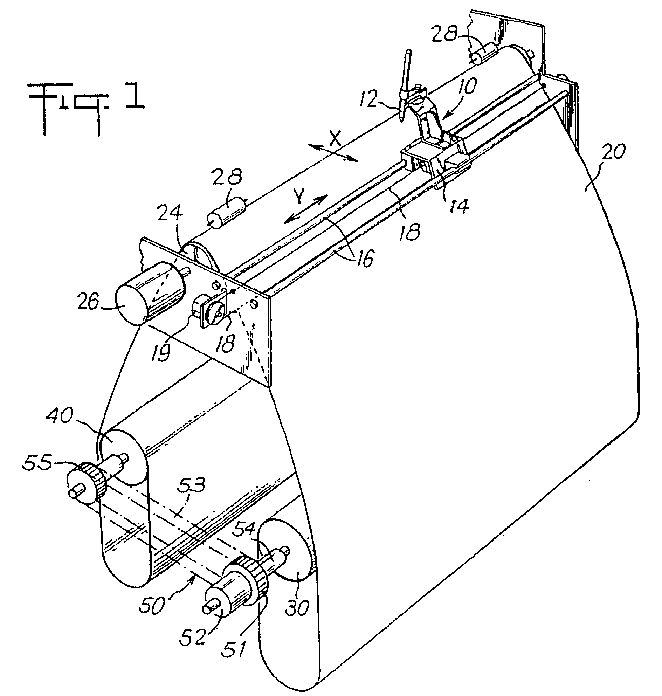

Dans une machine à dessiner telle que celle illustrée par la figure 1, un tracé à effectuer est réalisé par déplacement relatif suivant deux axes orthogonaux X, Y entre une tête d'impression ou d'écriture 10 portant un organe d'écriture 12 (plume, stylo ou crayon) et un support d'impression 20, tel qu'une bande de papier continue.

Par rapport au bâti de la machine, la tête d'impression 10 est mobile en translation dans la direction Y tandis que le support d'impression est mobile dans la direction perpendiculaire à la trajectoire de la tête. Dans l'exemple illustré, la tête d'impression 10 est portée par un chariot 14 qui peut se déplacer dans la direction Y le long de guides 16 et qui est solidaire d'un organe de transmission tel qu'un ruban ou câble sans fin 18 entraîné par un moteur 19.

Le support d'impression 20 est une bande de papier continue dévidée d'un rouleau de stockage ou rouleau débiteur 30 et passant sur un rouleau d'entraînement 24 d'axe parallèle à la direction Y. Le rouleau 24 est mis en rotation au moyen d'un moteur 26 et le papier est appliqué contre le rouleau 24 au moyen de galets presseurs 28. La zone d'action de l'organe d'écriture 12 est située au voisinage de la génératrice supérieure du rouleau 24, le papier étant au contact d'une surface de guidage (non représentée).

Conformément à l'invention, le papier 20, après impression, est reçu par un organe récepteur mobile 40 relié au rouleau débiteur 30 par l'intermédiaire d'une transmission mécanique 50. Dans l'exemple illustré, l'organe récepteur 40 est constitué par un rouleau sur lequel le papier est enroulé après impression.

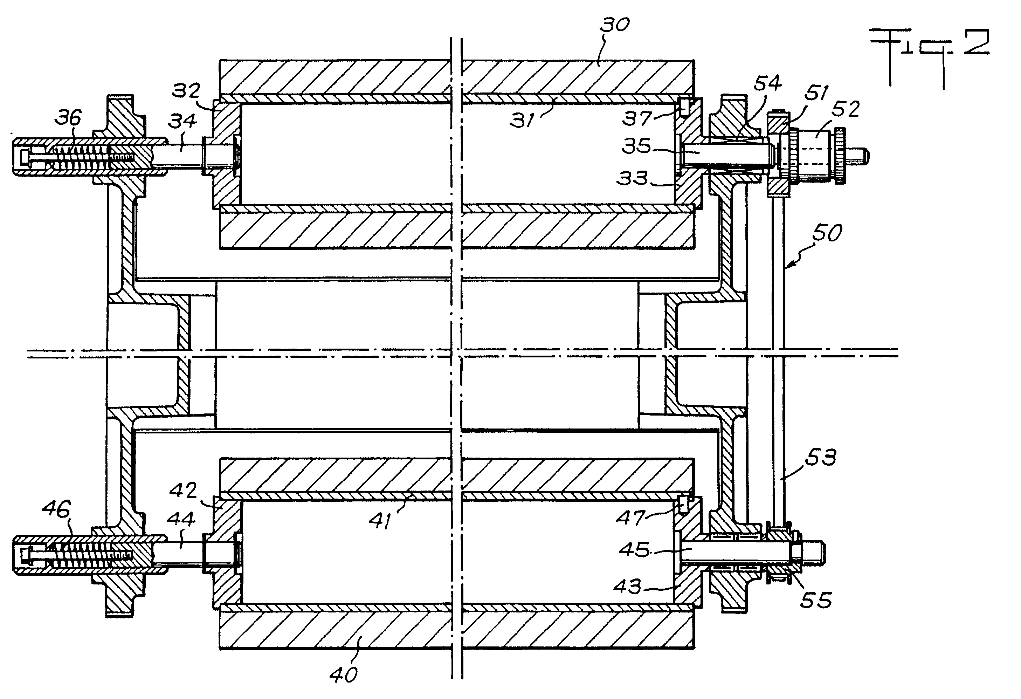

L'ensemble constitué par le rouleau débiteur 30, le rouleau récepteur 40 et les moyens de transmission 50 est représenté de façon plus détaillée sur la figure 2.

Comme montré sur la figure 2, le rouleau débiteur 30 comprend un mandrin 31 sur lequel est bobiné le papier 20. Le mandrin 31 est monté sur deux flasques 32, 33. Le flasque 32 est monté libre en rotation sur un axe 34 porté par le bâti de la machine tandis que le flasque 33 est solidaire d'un axe 35 supporté par un palier faisant partie de ce bâti. Par ailleurs, le flasque 32 est mobile axialement à l'encontre de la force exercée par un ressort 36 tendant à appliquer un épaulement du flasque 32 contre l'extrémité correspondante du mandrin 31. Le rouleau peut ainsi être retiré ou mis en place simplement en déplaçant axialement le flasque mobile 32.

La liaison en rotation entre le rouleau débiteur 30 et le flasque 33 portant l'axe 35 est réalisée au moyen d'un ergot de transmission 37 disposé radialement dans un logement du flasque 33 et s'engageant dans une encoche formée du côté intérieur du mandrin 31 à partir de l'extrémité de celui-ci portée par le flasque 33.

De la même façon, le rouleau récepteur 40 comprend un mandrin 41 sur lequel est bobiné le papier après impression. Le mandrin 41 est monté sur deux flasques 42, 43, le flasque 42 tournant autour d'un axe 44 porté par le bâti de la machine et le flasque 43 étant solidaire d'un axe 45 supporté par un palier faisant partie de ce bâti. Le flasque 42 est mobile axialement en étant rappelé par un ressort 46, et la liaison en rotation entre le flasque 43 et le mandrin 41 est assurée par un ergot de transmission 47. En variante, on notera ici que la liaison entre les rouleaux débiteur et récepteur et les flasques sur lesquels ils sont montés pourra être réalisée au moyen de systèmes à griffes portés par les flasques et s'appliquant contre les extrémités des mandrins.

Selon une caractéristique de l'invention, l'entraînement du rouleau récepteur 40 est assuré par le mouvement du rouleau débiteur 30 relayé par les moyens de transmission mécanique 50, le rouleau débiteur 30 étant avantageusement mû en rotation par le papier sous l'action du rouleau d'entraînement 24. Ainsi, aucun des rouleaux débiteur et récepteur n'est motorisé.

Dans l'exemple illustré, les moyens de transmission 50 comprennent une roue crantée 51 solidaire en rotation d'un limiteur de couple à friction 52 monté sur l'axe 35, un pignon cranté 55 solidaire en rotation de l'axe 45, et une courroie crantée 53 passant sur la roue 51 et le pignon 55. De plus, l'axe 35 est monté dans son palier par l'intermédiaire d'un organe formant roue libre 54 afin d'interdire la rotation de l'axe 35 dans le sens opposé à celui correspondant au dévidage du papier stocké sur le rouleau débiteur 30.

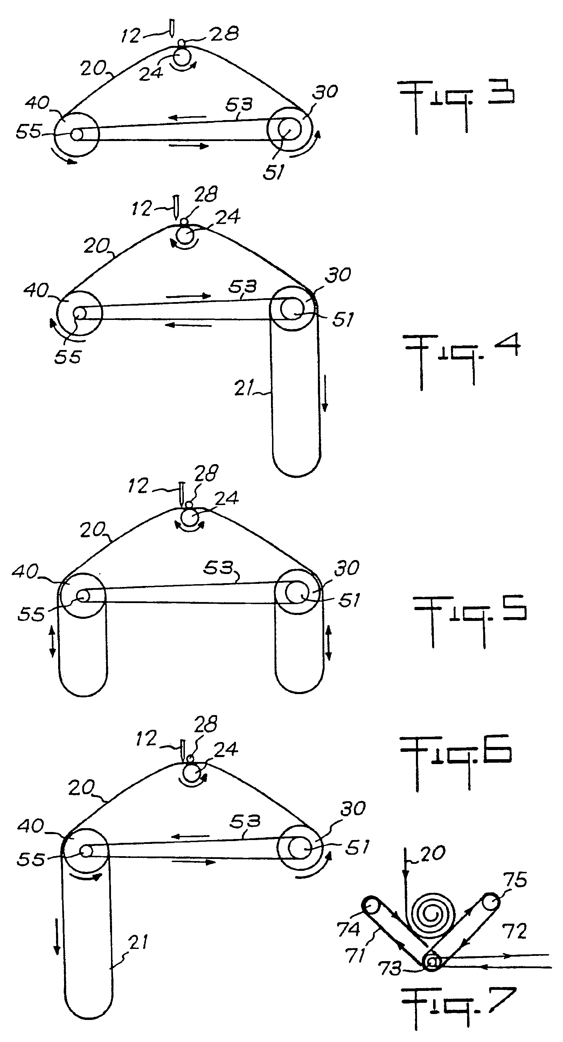

Le fonctionnement de la machine décrite ci-dessus sera maintenant expliqué avec référence, notamment aux figures 3 à 6.

Lorsqu'un rouleau débiteur de papier a été mis en place sur les flasques 32, 33, le bord libre du papier est tiré pour être fixé sur le mandrin 41 du rouleau récepteur 40.

Ensuite, le moteur 26 est commandé pour entraîner le rouleau d'entraînement 24 en rotation en sens avant afin de dévider du rouleau 30 une longueur de papier suffisante à l'exécution d'un dessin à reproduire. Pendant le dévidage du papier, le rouleau débiteur 30 est entraîné en rotation par le papier et entraîne à son tour en rotation le rouleau récepteur par l'intermédiaire de la transmission 50. Ainsi, en même temps qu'il est dévidé du rouleau débiteur 30, le papier s'enroule sur le rouleau 40 (figure 3).

Lorsque la longueur de papier nécessaire a été dévidée, le rouleau d'entraînement 24 est entraîné en rotation en sens arrière pour revenir au moins jusqu'à la position de départ. Pendant cette rotation arrière du rouleau 24, le papier est donc dévidé du rouleau récepteur 40 sur lequel il a été précédemment enroulé. Le rouleau récepteur 40 est entraîné en rotation en sens arrière et ce mouvement est transmis au pignon 55, à la courroie 53 et à la roue crantée 51. La roue libre 54 empêchant toute rotation du rouleau débiteur 30 en sens arrière, le mouvement de la roue crantée 51 est entièrement absorbé par le limiteur de couple "patinant" sur l'axe 35. Il se forme ainsi une boucle libre de papier 21 de longueur suffisante à l'exécution du dessin à reproduire (figure 4).

Le dessin est réalisé de façon classique en commandant les déplacements du papier et de la tête d'écriture. Le déplacement du papier en direction X dans un sens et dans l'autre n'intéresse que la partie 21 formant boucle libre (figure 5). Ainsi, lors de l'exécution du tracé, aucune rotation des rouleaux 30 et 40 n'est provoquée, ce qui serait particulièrement défavorable à la rapidité d'exécution compte-tenu des masses à déplacer.

Il est préférable de former une boucle libre de longueur supérieure à celle correspondant au format du dessin à exécuter, ceci afin de ménager une marge de boucle libre lorsque l'on atteint le bord avant ou le bord arrière du format et éviter ainsi de venir en butée avec le papier tendu entre la zone d'écriture, le long du bord avant ou du bord arrière, et le rouleau récepteur ou débiteur. A cet effet, le papier est dévidé du rouleau débiteur sur une longueur légèrement supérieure à celle correspondant au format, et le retour du papier en sens arrière est réalisé sur une longueur légèrement supérieure à la longueur dévidée.

En fin d'exécution du dessin, le moteur 26 est commandé pour entraîner le rouleau 24 vers l'avant et déplacer le papier jusqu'à ce que le dessin exécuté se trouve en aval de la tête d'écriture, c'est-à-dire jusqu'à ce que la boucle libre portant le dessin se trouve entièrement à l'avant de la tête d'écriture (figure 6).

Un nouveau cycle d'exécution de dessins peut alors être effectué en commençant par le dévidage d'une nouvelle longueur de papier, dévidage provoquant l'enroulement sur le rouleau récepteur de la partie du papier portant le dessin précédent.

Compte-tenu des diamètres respectifs des rouleaux 30 et 40, on choisira entre ces rouleaux un rapport de transmission suffisant pour assurer l'enroulement sur le rouleau récepteur d'au moins la longueur de papier dévidée du rouleau débiteur, et ce dès le début de l'utilisation du rouleau débiteur. De préférence, on fait en sorte d'enrouler sur le rouleau récepteur une longueur de papier légèrement supérieure à celle dévidée en choisissant un rapport de transmission tel que la vitesse linéaire d'enroulement du papier sur le rouleau récepteur soit toujours supérieure à la vitesse linéaire de déroulement du papier du rouleau débiteur du début à la fin du rouleau de papier. Le limiteur de couple 52 évite tout blocage qui pourrait se produire ultérieurement, notamment en raison de l'évolution des diamètres extérieurs des rouleaux, si au cours du dévidage, l'on parvenait à une configuration dans laquelle le papier est tendu entre le rouleau débiteur 30 et le rouleau récepteur 40 ; en effet, le limiteur de couple 52 autorise alors un glissement entre l'axe 35 et la roue crantée 51.

Dans un exemple de mise en oeuvre de l'invention avec des rouleaux débiteur et récepteur ayant des mandrins de diamètres égaux à 58,5 mm et une longueur de papier totale égale à 35 m, ce qui correspond à un diamètre extérieur initial à 92 mm pour le rouleau débiteur plein, le rapport de transmission entre rouleau récepteur et rouleau débiteur a été choisi égal à 1,65 (c'est-à-dire une vitesse de rotation du rouleau récepteur 1,65 fois plus grande que celle du rouleau débiteur).

Dans la machine qui vient d'être décrite, le dispositif de réception est essentiellement constitué par un rouleau récepteur sur lequel le papier imprimé est enroulé. Bien que non préférées, d'autres formes de réalisation du dispositif de réception pourront être envisagées. A titre d'exemple, comme illustré par la figure 7, on peut utiliser deux transporteurs sans fin 71, 72 passant sur un rouleau commun 73, relié au rouleau débiteur par une transmission mécanique, et sur deux rouleaux de renvoi respectifs 74, 75. Les transporteurs 71, 72 sont formés de bandes parallèles disposées de façon alternée autour du rouleau 73 et forment les deux branches d'un V. Le papier est amené au contact des transporteurs 71, 72 et s'enroule sur lui-même en étant entraîné par frottement. On notera que, dans ce mode de réalisation, il n'est pas nécessaire de prévoir de moyens particuliers pour autoriser un glissement relatif entre le rouleau 71 et le rouleau débiteur et pour empêcher l'entraînement en rotation arrière du rouleau débiteur.

## Revendications

1. Machine graphique comprenant un dispositif d'impression (10), un rouleau débiteur (30) d'un support d'impression continu (20), des moyens d'entraînement (24) du support d'impression pour le déplacer par rapport au dispositif d'impression afin d'exécuter un dessin, et un dispositif de réception (40 ; 71, 72) du support d'impression disposé en aval du dispositif d'impression et destiné à venir en prise avec le support d'impression (20) pour permettre le stockage de celui-ci, caractérisée en ce que des moyens de transmission (50) sont prévus entre le rouleau débiteur (30) et le dispositif de réception (40 ; 71, 72) de manière que le rouleau débiteur entraîne le dispositif de réception lorsque le support d'impression est dévidé du rouleau débiteur par les moyens d'entraînement afin de stocker le support d'impression après exécution du dessin.

2. Machine selon la revendication 1, caractérisée en ce que le dispositif de réception est constitué par un rouleau récepteur (40) sur lequel le support d'impression est enroulé.

3. Machine selon la revendication 2, caractérisée en ce que la transmission de mouvement du rouleau débiteur (30) au rouleau récepteur (40) est unidirectionnelle.

4. Machine selon la revendication 3, caractérisée en ce que le rouleau débiteur (30) est bloqué en rotation dans le sens inverse du sens de dévidage.

5. Machine selon l'une quelconque des revendications 2 à 4, caractérisée en ce que le rapport de transmission entre rouleau débiteur (30) et rouleau récepteur (40) est déterminé de manière à assurer l'enroulement sur le rouleau récepteur d'au moins la longueur de papier dévidée du rouleau débiteur.

6. Machine selon la revendication 5, caractérisée en ce que le rapport de transmission est tel que la vitesse linéaire d'enroulement du support d'impression (20) sur le rouleau récepteur (40) est toujours supérieure à la vitesse linéaire de déroulement du support d'impression du rouleau débiteur (30).

7. Machine selon l'une quelconque des revendications 1 à 6, caractérisée en ce que les moyens de transmission comprennent des moyens (52) pour permettre un glissement relatif en rotation entre le rouleau débiteur (30) et le dispositif de réception (40).

8. Machine selon la revendication 7, caractérisée en ce que les moyens de transmission comprennent un limiteur de couple (52) monté sur l'axe du rouleau débiteur (30).

9. Machine selon la revendication 1 caractérisée en ce que le dispositif de réception comprend des moyens transporteurs (71, 72) contre lesquels le support d'impression (10) est entraîné par friction pour être enroulé sur lui-même.

10. Machine graphique selon la revendication 1 comprenant comme rouleau débiteur un rouleau (30) débiteur de papier continu, comme dispositif d'impression une tête d'écriture (10), des moyens (24) d'entraînement du papier pour le déplacer dans une première direction par rapport à la tête d'écriture, des moyens d'entraînement de la tête d'écriture pour la déplacer dans une deuxième direction perpendiculaire à la première par rapport au papier, et un rouleau récepteur (40) sur lequel le papier est enroulé en aval de la tête d'écriture, caractérisée en ce que l'entraînement en rotation du rouleau récepteur (40) est réalisé au moyen du rouleau débiteur (30) par l'intermédiaire d'un dispositif de transmission mécanique (50) comprenant des moyens (52, 54) pour permettre un glissement relatif entre rouleau débiteur (30) et rouleau récepteur (40) et bloquer le rouleau débiteur (30) en rotation dans le sens inverse du sens de dévidage.

11. Machine selon la revendication 10, caractérisée en ce que le rouleau récepteur (40) est entraîné en rotation par l'intermédiaire du rouleau débiteur (30) lorsque celui-ci est mis en rotation par le papier (20) sous l'action des moyens d'entraînement (24) de celui-ci.

12. Procédé de réalisation de dessins successifs sur papier continu au moyen d'une machine graphique selon l'une quelconque des revendications 10 et 11, avec le rapport de transmission entre rouleau débiteur et rouleau récepteur étant déterminé de manière à assurer l'enroulement sur le rouleau récepteur d'au moins la longueur de papier dévidée du rouleau débiteur comprenant les étapes qui consistent à:

– commander les moyens d'entraînement du papier en sens avant pour dévider du rouleau débiteur une longueur de papier suffisante à l'exécution d'un dessin et enrouler simultanément une longueur au moins égale de papier sur le rouleau récepteur,

– commander les moyens d'entraînement du papier en sens arrière pour dévider celui-ci du rouleau récepteur sur une longueur suffisante à l'exécution du dessin afin de former une boucle libre,

– réaliser le dessin à exécuter en commandant des déplacements respectifs du papier et de la tête d'écriture au moyen desdits moyens d'entraînement, sans entraîner les rouleaux, et,

– réitérer les étapes précédentes pour chaque nouveau dessin à exécuter.

13. Procédé selon la revendication 12, caractérisé en ce qu'il comprend de plus, après l'étape de réalisation du dessin, l'étape consistant à
–commander les moyens d'entraînement du papier en sens avant pour amener la totalité de la boucle libre en aval de la tête d'écriture.

## Ansprüche

1. Grafische Vorrichtung mit einer Aufzeichnungseinrichtung (10), einer Abzugswalze (30) für einen ununterbrochenen Aufzeichnungsträger (20), Antriebsmitteln (24) für die Bewegung des Aufzeichnungsträgers in Bezug auf die Aufzeichnungseinrichtung zum Zweck der Ausführung einer Zeichnung, und einer Annahmeeinrichtung (40 ; 71, 72) für den Aufzeichnungsträger, die der Aufzeichnungseinrichtung nachgeordnet ist und dazu eingerichtet ist, mit dem Aufzeichnungsträger (20) in Eingriff zu treten, um dessen Speicherung zu ermöglichen, dadurch **gekennzeichnet,** daß Transmissionsmittel (50) derart zwischen der Abzugswalze (30) und der Annahmeeinrichtung (40 ; 71, 72) angeordnet sind, daß die Abzugswalze die Annahmeeinrichtung antreibt, wenn der Aufzeichnungsträger durch die Antriebsmittel von der Abzugswalze abgewickelt wird, so daß der Aufzeichnungsträger nach der Ausführung der Zeichnung gespeichert wird.

2. Vorrichtung nach Anspruch 1, dadurch **gekennzeichnet**, daß die Annahmeeinrichtung durch eine Empfangswalze (40) gebildet wird, auf welche der Aufzeichnungsträger aufgewickelt wird.

3. Vorrichtung nach Anspruch 2, dadurch **gekennzeichnet**, daß die Übertragung der Bewegung der Abzugswalze (30) auf die Empfangswalze (40) nur in einer Richtung erfolgt.

4. Vorrichtung nach Anspruch 3, dadurch **gekennzeichnet**, daß die Abzugswalze (30) gegen eine Drehung in einem der Abwickelrichtung entgegengesetzten Drehsinn gesperrt ist.

5. Vorrichtung nach einem der Ansprüche 2 bis 4, dadurch **gekennzeichnet**, daß das Übersetzungsverhältnis zwischen der Abzugswalze (30) und der Empfangswalze (40) derart bestimmt ist, daß das Aufwickeln zumindest der von der Abzugswalze abgewickelten Papierlänge auf die Empfangswalze sichergestellt ist.

6. Vorrichtung nach Anspruch 5, dadurch **gekennzeichnet**, daß das Übersetzungsverhältnis so gewählt ist, daß die Umfangsgeschwindigkeit beim Aufwickeln des Aufzeichnungsträgers (20) auf die Empfangswalze (40) stets größer ist als die Umfangsgeschwindigkeit beim Abwickeln des Aufzeichnungsträgers von der Abzugswalze (30).

7. Vorrichtung nach einem der Ansprüche 1 bis 6, dadurch **gekennzeichnet**, daß die Transmissionsmittel mit Mitteln (52) versehen sind, die eine Rutschkupplungswirkung zwischen der Drehung der Abzugswalze (30) und der Drehung der Empfangswalze (40) gestatten.

8. Vorrichtung nach Anspruch 7, dadurch **gekennzeichnet**, daß die Transmissionsmittel einen Drehmomentbegrenzer (52) aufweisen, der auf der Achse der Abzugswalze (30) montiert ist.

9. Vorrichtung nach Anspruch 1, dadurch **gekennzeichnet**, daß die Annahmeeinrichtung Transportmittel (71, 72) aufweist, an denen der Aufzeichnungsträger (10) reibschlüssig derart angetrieben wird, daß er sich selbst aufwickelt.

10. Vorrichtung nach Anspruch 1, mit einer Endlos-Papierrolle (30) als Abzugswalze, einem Schreibkopf (10) als Aufzeichnungseinrichtung, Papier-Antriebsmitteln (24) zum Bewegen des Papiers in einer ersten Richtung in Bezug auf den Schreibkopf, Schreibkopf-Antriebsmitteln zum Bewegen des Schreibkopfes in einer zweiten Richtung, rechtwinklig zu der ersten Richtung, in Bezug auf das Papier, und mit einer Empfangswalze (40), auf die das Papier stromabwärts des Schreibkopfes aufgewickelt wird, dadurch **gekennzeichnet**, daß der Drehantrieb für die Empfangswalze (40) mit Hilfe der Abzugswalze (30) unter Vermittlung durch einen Transmissionsmechanismus (50) erfolgt, der Mittel (52,54) zur Ermöglichung einer relativen Rutschbewegung zwischen der Abzugswalze (30) und der Empfangswalze (40) und zum Blockieren der Abzugswalze (30) in dem der Abwickelrichtung entgegengesetzten Drehsinn aufweist.

11. Vorrichtung nach Anspruch 10, dadurch **gekennzeichnet**, daß der Drehantrieb für die Empfangswalze (40) über die Abzugswalze (30) erfolgt, wenn letztere unter der Wirkung der Papier-Antriebsmittel (24) durch das Papier (20) in Drehung versetzt wird.

12. Verfahren zur Anfertigung von aufeinanderfolgenden Zeichnungen auf einem ununterbrochenen Papier mit Hilfe einer grafischen Vorrichtung nach Anspruch 10 oder 11, wobei das Übersetzungsverhältnis zwischen der Abzugswalze und der Empfangswalze so gewählt ist, daß sichergestellt ist, daß wenigstens die von der Abzugswalze abgewickelte Papierlänge auf die Empfangswalze aufgewickelt wird, mit den folgenden Schritten :

— Steuern der Papier-Antriebsmittel in Vorwärtsrichtung, um eine ausreichende Papierlänge für die Anfertigung einer Zeichnung von der Abzugswalze abzuwickeln und gleichzeitig eine gleich große Papierlänge auf die Empfangswalze aufzuwickeln,

— Steuern der Papier-Antriebsmittel in Rückwärtsrichtung, um das Papier in einer für die Anfertigung der Zeichnung ausreichenden Länge von der Empfangswalze abzuwickeln, so daß eine Freischleife gebildet wird,

— Ausführen der anzufertigenden Zeichnung durch Steuern der Bewegungen des Papiers und des Schreibkopfes mit Hilfe der genannten Antriebsmittel, ohne daß die Walzen angetrieben werden, und

— Wiederholen der vorgenannten Schritte für jede neue auszuführende Zeichnung.

13. Verfahren nach Anspruch 12, dadurch **gekennzeichnet**, daß im Anschluß an den Schritt der Ausführung der Zeichnung als weiterer Schritt vorgesehen ist

— Steuern der Papier-Antriebsmittel in Vorwärtsrichtung, um die gesamte Freischleife in den Bereich stromabwärts des Schreibkopfes zu überführen.

## Claims

1. Graphic machine comprising a writing device (10), a feed roll (30) for supplying a continuous print medium (20), means (24) for driving said print medium for displacing it with respect to the writing device (10) for producing a drawing, and a take-up means (40 ; 71,72) for the print medium situated downstream of the writing device and destined to come in contact with the print medium (20) for storing said print medium, characterized in that transmission means (50) are provided between the feed roll (30) and the take up means (40 ; 71,72) so that the feed roll drives the take-up means when the print medium is payed out from the feed roll by the driving means in order to take-up said print medium after producing the drawing.

2. Machine according to claim 1, characterized in that the take-up means comprise a take-up roll (40) onto which the print medium is wound.

3. Machine according to claim 2, characterized in that the transmission movement from the feed roll (30) to the take-up roll (40) is unidirectional.

4. Machine according to claim 3, characterized in that the rotation of the feed roll (30) is blocked in the reverse direction of said feed roll paying out direction.

5. Machine according to any one of the claims 2-4, characterized in that the transmission ratio between the feed roll (30) and the take-up rol (40) is chosen in a way to assure the take-up on the take-up roll of at least the length of paper payed out by the feed roll.

6. Machine according to claim 5, characterized in that the transmission ratio is such that the linear winding speed of the print medium (20) on the take-up roll (40) is always higher than the linear speed at which the print medium is payed out from the feed roll (30).

7. Machine according to any one of the claims 1-6, characterized in that the transmission means comprise means (52) to permit a relative rational slippage between the feed roll (30) and the take-up means (40).

8. Machine according to claim 7, characterized in that the transmission means comprise a torque limiter (52) mounted on the axis of the feed roll (30).

9. Machine according to claim 1, characterized in that the take-up means comprise transporting means (71,72) against which the print medium (20) is driven for winding about itself by friction.

10. Graphic machine according to claim 1 comprising as a feed roll a feed roll (30) for a continuous supply of paper, as a writing device a write head (10), means (24) for driving the paper to displace it in a first direction with respect to the write head 10, means for driving the write head for displacing it in a second direction perpendicular to the first direction with respect to the paper and a take-up roll (40) on which the paper is wound, downstream of the write head, characterized in that the rotation of the take-up roll (40) is realized by means of the feed roll (30) through a mechanical transmission device (50) comprising means (52,54) for permitting a relative slipping between feed roll (30) and take-up roll (40) and for blocking the rotation of the feed roll (30) in the direction reverse to the feed roll paying out direction.

11. Machine according to claim 10, characterized in that the take-up roll is rotatably driven by means of the feed roll (30) when the latter is set in rotational movement by the paper (20) by means of the driving means (24) of the paper.

12. Process for the production of successive drawings on a continuous length of paper using a graphic machine according to any one of claims 10-11, the transmission ratio between the feed roll and the take-up roll being chosen so as to ensure the winding on the take-up roll of at least the length of paper payed out by the feed roll, comprising the steps consisting of :
- commanding the paper drive means in a forward direction for paying out from the feed roll a length of paper sufficient for the production of a drawing and simultaneously winding an at least equal length of paper on to the take-up roll,
- commanding the paper drive means in a reverse direction to pay out a length of paper sufficient for the production of a drawing from the take-up roll, to form a free loop of said paper,
- producing the drawing by commanding respective displacements of the paper and the write head by means of said drive means, without driving the feed roll and the take-up roll and
- repeating the preceding steps for each new drawing which is to be produced.

13. Process according to claim 12, characterized in that the process also comprises, after the step of producing the drawing the step consisting of commanding the paper drive means in forward direction to bring the total free loop of the paper downstream of the writehead.

Fig. 1

EP 0 283 339 B1

Fig.2

EP 0 283 339 B1

Fig. 3

Fig. 4

Fig. 5

Fig. 6

Fig. 7